# EUROPÄISCHE PATENTSCHRIFT

(11) **EP 4 568 832 B1**
(45) Veröffentlichungstag und Bekanntmachung des Hinweises auf die Patenterteilung: **27.05.2026**
(21) Anmeldenummer: 23757845.5
(22) Anmeldetag: 08.08.2023
(51) Int. Cl.: B32B 5/02, B32B 5/26, B32B 7/14, A41D 31/08, D04H 1/52

(54) **VERFAHREN ZUR HERSTELLUNG EINES SCHWERENTFLAMMBAREN VLIESSTOFF-MEMBRAN-LAMINATS HOHER ELASTIZITÄT, SCHWERENTFLAMMBARES VLIESSTOFF-MEMBRAN-LAMINAT UND SCHWERENTFLAMMBARE SCHUTZBEKLEIDUNG**
METHOD FOR PRODUCING A HIGHLY ELASTIC FLAME-RESISTANT NONWOVEN-MEMBRANE LAMINATE, FLAME-RESISTANT NONWOVEN-MEMBRANE LAMINATE AND FLAME-RESISTANT PROTECTIVE WEAR
PROCÉDÉ DE PRODUCTION D'UN STRATIFIÉ À MEMBRANE NON TISSÉE IGNIFUGE HAUTEMENT ÉLASTIQUE, STRATIFIÉ À MEMBRANE NON TISSÉE IGNIFUGE ET VÊTEMENT DE PROTECTION IGNIFUGE

(30) Priorität: 09.08.2022 DE 102022120024
(43) Veröffentlichungstag der Anmeldung: 18.06.2025
(73) Patentinhaber: Trans-Textil GmbH, 83395 Freilassing (DE); Tenowo GmbH, 95028 Hof (DE)
(72) Erfinder: GSTETTNER, Alexander, 4661 Roitham (AT); SCHUMANN, Anja, 09648 Mittweida (DE)
(74) Vertreter: Flach Bauer & Partner Patentanwälte mbB
(86) Internationale Anmeldenummer: PCT/EP2023/071944
(87) Internationale Veröffentlichungsnummer: WO 2024/033367

(56) Entgegenhaltungen:
- EP-A1- 0 465 130
- WO-A1-00/63011
- WO-A2-01/02163
- DE-U1- 202009 015 427
- DE-U1- 202020 102 447

## Beschreibung

Die Erfindung betrifft ein Verfahren zur Herstellung eines schwerentflammbaren Vliesstoff-Membran-Laminats gemäß dem Oberbegriff des Anspruchs 1, ein schwerentflammbares Vliesstoff-Membran-Laminat gemäß Anspruch 6 sowie eine schwerentflammbare Schutzbekleidung gemäß Anspruch 11.

Schwerentflammbare Textil-Laminate und deren Verwendung in schwerentflammbarer Schutzbekleidung sind grundsätzlich bereits aus der DE 202020102447 U1 bekannt. Eine derartige Schutzbekleidung wird beispielsweise bei der Feuerwehr, Industriearbeitern, die insbesondere einen Schutz vor elektrischen Störlichtbögen benötigen, Polizei, beim Militär und im Motorsport verwendet. Die Wahl der textilen Materialien und Membranen hängt dabei vom jeweiligen Einsatzzweck des Textillaminats ab.

Eine der Materiallagen des bekannten Textil-Laminats kann ein Vliesmaterial sein, auf das eine atmungsaktive, d.h. wasserdampfdurchlässige, jedoch wasserundurchlässige Membran auflaminiert wird.

Bei der DE 202020102447 U1 können die Atmungs- und Elastizitätseigenschaften bereits dadurch erheblich verbessert werden, dass der zum Verbinden der Materiallagen verwendete Klebstoff in Form eines hexagonalen oder dreieckförmigen Gittermusters aufgebracht wird.

Für bestimmte Einsatzzwecke ist es jedoch erwünscht, schwerentflammbare Vliesstoff-Membran-Laminate zur Verfügung zu haben, die eine besonders hohe Elastizität und Dehnbarkeit und ein besonders gutes Rücksprungverhalten haben. Diese Eigenschaften sind beispielsweise bei Kopfschutzhauben, Bündchen oder elastischen Einsätzen in schwerentflammbaren Schutzbekleidungsstücken besonders wichtig.

Der Erfindung liegt daher die Aufgabe zugrunde, ein Verfahren zu schaffen, mit dem ein schwerentflammbares Vliesstoff-Membran-Laminat hergestellt werden kann, das eine besonders hohe Elastizität und Dehnbarkeit sowie ein besonders gutes Rücksprungverhalten aufweist. Weiterhin soll ein schwerentflammbares Vliesstoff-Membran-Laminat sowie eine schwerentflammbare Schutzbekleidung mit einem derartigen Vliesstoff-Membran-Laminat geschaffen werden.

Diese Aufgabe wird erfindungsgemäß mit einem Verfahren mit den Merkmalen des Anspruchs 1, einem schwerentflammbaren Vliesstoff-Membran-Laminat gemäß Anspruch 6 und einer schwerentflammbaren Schutzbekleidung gemäß Anspruch 11 gelöst. Vorteilhafte Ausführungsformen der Erfindung sind in den weiteren Ansprüchen angegeben.

Das erfindungsgemäße Verfahren ist durch folgende Schritte gekennzeichnet:
- Bereitstellen eines schwerentflammbaren Vliesstoffs,
- Übernähen des Vliesstoffs mit einem elastischen Nähgarn mittels eines Nähwirkverfahrens oder mittels Versteppung, wobei das elastische Nähgarn in einem gedehnten Zustand mit dem Vliesstoff vernäht wird,
- Auflaminieren einer Membran auf den übernähten Vliesstoff zur Bildung eines Vliesstoff-Membran-Laminats,
- Krumpfen des Vliesstoff-Membran-Laminats mittels eines Blindfärbe- oder Färbeprozesses in einer Färbemaschine oder einem Färbeapparat, wobei das Vliesstoff-Membran-Laminat in lockerer, nicht gespannter Form eine Flotte durchläuft oder in dieser verweilt,
- spannungsarmes Trocknen des ausgekrumpften Vliesstoff-Membran-Laminats, so dass das ausgekrumpfte und getrocknete Vliesstoff-Membran-Laminat zwischen einem zusammengezogenen Zustand und einem auseinandergezogenen Zustand elastisch verformbar ist und vom auseinandergezogenen Zustand mittels des elastischen Nähgarns in den zusammengezogenen Zustand rückführbar ist.

Der Begriff "Vliesstoff" wird im Rahmen der vorliegenden Erfindung im breitesten Sinn gebraucht und umfasst beispielsweise auch Faserflore.

Es hat sich überraschenderweise gezeigt, dass durch die Kombination aus Übernähen eines schwerentflammbaren Vliesstoffs mit einem elastischen Nähgarn, einem Krumpfen, insbesondere vollständigen Auskrumpfen, des Vliesstoffs nach dem Auflaminieren der Membran unter spannungsarmen Bedingungen mittels einer Flotte in einem Blindfärbe- oder Färbeprozess und dem anschließenden Trocknen des gekrumpften Vliesstoff-Membran-Laminats unter spannungsarmen Bedingungen ein schwerentflammbares Vliesstoff-Membran-Laminat mit sehr hoher Dehnbarkeit, Elastizität und hervorragendem Rücksprungverhalten hergestellt werden kann.

Vorzugsweise besteht der schwerentflammbare Vliesstoff aus einem oder mehreren der folgenden Materialien: M-Aramid, P-Aramid, Polyamidimid, Polyimid, Polybenzimidazol, Polybenzoxazol, Modacryl, Melaminharz, Viscose FR, Modal FR, Lyocell FR, Baumwolle FR, Baumwolle, Viskose, Modal, Lyocell, Aromatisches PES, Wolle, Polyamid, Polyester. Der Vliesstoff kann aus einem der vorgenannten Materialien oder aus einer Mischung mehrerer der vorgenannten Materialien bestehen. Insbesondere kann der Vliesstoff aus einer Mischung von Zellulosefasern und Modacryl-Fasern bestehen. Die Schwerentflammbarkeit kann eine inhärente Eigenschaft der jeweiligen Vliesstoff-Fasern sein oder durch eine entsprechende Ausrüstung des Vliesstoffs erzielt werden.

Vorzugsweise ist der schwerentflammbare Vliesstoff ein Malivlies, Wasserstrahlvlies, Nadelvlies oder -filz. Der Vliesstoff kann auch durch chemische Faserverfestigung oder durch thermische Faserverfestigung mittels Einmischung und Aktivierung von Bikomponentenfasern hergestellt sein.

Ein bevorzugtes Ausführungsbeispiel für einen erfindungsgemäßen schwerentflammbaren Vliesstoff ist ein Malivlies aus 40-60 Gew.-%, insbesondere 50 Gew.-%, meta-Aramid und 60-40 Gew.-%, insbesondere 50 Gew.-%, Viskose FR, wobei das Malivlies ein Flächengewicht von 80-120 g/m², insbesondere 100 g/m², aufweist.

Durch das Übernähen des noch nicht gekrumpften Vliesstoffs mit einem vorgespannten elastischen Nähgarn wird ein übernähter Vliesstoff geschaffen, bei dem das Nähgarn auf den Vliesstoff eine Kontraktionskraft ausübt, die versucht, den Vliesstoff zusammenzuziehen. Zweckmäßigerweise erfolgt das Übernähen derart, dass die Kontraktionskräfte in einer bestimmten Richtung wirken, insbesondere in Maschinenlängsrichtung des Vliesstoffs.

Vorzugsweise wird das Übernähen des Vliesstoffs mit dem elastischen Nähgarn mittels des Maliwatt-Verfahrens durchgeführt. Beim Maliwatt-Verfahren handelt es sich um ein Nähwirkverfahren, bei dem mittels einer Vielzahl parallel verlaufender eingebundener Wirkfäden Maschen gebildet werden, die eine mechanische Verfestigung des Vliesstoffs bewirken. Als Wirkfaden wird beim erfindungsgemäßen Verfahren ein elastisches Nähgarn verwendet, das in einem gedehnten Zustand, d. h. mit einer bestimmten Vorspannung, mit dem Vliesstoff vernäht wird. Der Vliesstoff besteht vorzugsweise aus einem kreuzgelegten Stapelfaservlies oder Spinnvlies.

Es ist auch denkbar, das Übernähen des Vliesstoffs mittels des elastischen Nähgarns durch ein Versteppen durchzuführen.

Das elastische Nähgarn besteht vorzugsweise aus Elasthan (Spandex) oder Silikon.

Bei einem bevorzugten Ausführungsbeispiel wird ein Malivlies aus 50 Gew.-% meta-Aramid und 50 Gew.-% Viskose FR, das ein Flächengewicht von 100 g/m² aufweist, mit einem 78 dtex Elasthan-Multifilamentgarn in Trikot-Legung übernäht.

Auf den übernähten Vliesstoff wird die Membran auflaminiert. Dieses Auflaminieren erfolgt derart, dass ein späteres Zusammenziehen und Dehnen des Vliesstoff-Membran-Laminats nicht behindert wird. Da es sich bei der Membran um ein sehr dünnes, geschmeidiges Flächengebilde handelt, kann auch die Membran einem nachfolgenden Schrumpfvorgang des Vliesstoffs folgen.

Das Auflaminieren der Membran auf den übernähten Vliesstoff wird vorzugsweise mittels eines Klebstoffs durchgeführt, der in Form eines Gittermusters, hexagonalen Musters oder dreieckförmigen Musters auf den Vliesstoff oder die Membran aufgebracht wird. Hierdurch werden klebstofffreie Bereiche gebildet, welche besonders vorteilhaft in Bezug auf Atmungsaktivität, Elastizität und Dehnbarkeit des Laminats sind. Andere Arten des Klebstoffauftrags sind ohne weiteres möglich.

Vorzugsweise ist die Membran eine wasserdampfdurchlässige, d. h. atmungsaktive Membran, die aus Polyurethan, Polyester, Polyether, ePTFE, Polyurethan-Nanofasern, Bikomponenten-Polyether oder Bikomponenten-ePTFE besteht. Vorzugsweise ist die Membran wasserundurchlässig.

Die Membranen können in üblicher Weise durch ein Meltblown-, Elektrospinning- bzw. Nanospinningverfahren, durch Verstrecken bzw. Recken von Polymeren wie zum Beispiel PES, PET oder PTFE, oder im Einstrich- oder Mehrstrichverfahren zum Beispiel auf Basis Polyurethan hergestellt sein.

Es ist ohne weiteres möglich, auf den Vliesstoff vor dem Krumpfen eine oder sogar mehrere weitere Textillagen aufzulaminieren, die in der Lage sind, den gewünschten Waschkrumpf mitzumachen. Das Auflaminieren der weiteren Textillage(n) kann vor oder nach dem Auflaminieren der Membran erfolgen. Die weitere(n) Textillage(n) kann (können) aus demselben oder einem anderen Material wie der Vliesstoff bestehen.

Das Krumpfen des übernähten Vliesstoff-Membran-Laminats erfolgt mittels eines Blindfärbe- oder Färbeprozesses in einer Färbemaschine oder einem Färbeapparat. Ein derartiger Blindfärbe- oder Färbeprozess ermöglicht durch die spezifische Kombination aus vollständiger Durchnässung des Vliesstoffs mittels einer Flotte, den in Färbemaschinen oder Färbeapparaten üblicherweise vorherrschenden Temperaturen, der dort verwendeten Mechanik und dem spannungsfreien Durchführen bzw. Verweilen des Laminats in der Flotte ein besonders effektives Krumpfen, insbesondere ein vollständiges Auskrumpfen, des Laminats.

Durch das Krumpfen des Laminats werden Spannungen innerhalb des Laminats beseitigt. Das elastische Nähgarn bewirkt oder unterstützt dabei aufgrund seiner Vorspannung das Schrumpfen bzw. Zusammenziehen des Laminats.

Um eine hohe Elastizität und Dehnbarkeit des Vliesstoff-Membran-Laminats zu erreichen, weist das Laminat vor dem Krumpfen vorzugsweise einen Waschkrumpf von mindestens 15% in Längs-und/oder Querrichtung auf. Hierdurch ist es möglich, das Laminat nach dem vollständigen Auskrumpfen um ein dem Waschkrumpf entsprechendes Maß, d. h. um mindestens 15%, auf elastische Weise zu dehnen.

Die Messung des Waschkrumpfs erfolgt nach DIN EN ISO 5077.

Vorzugsweise wird das Krumpfen des Vliesstoff-MembranLaminats in einer Haspelkufe oder einer Jet-Färbemaschine durchgeführt, wobei das Vliesstoff-Membran-Laminat die Flotte in lockerer, nicht gespannter Form durchläuft.

Das anschließende Trocknen des gekrumpften Vliesstoff-Membran-Laminats erfolgt spannungsarm, d. h. in lockerer, nicht gespannter Form des Laminats, wobei Spannungen innerhalb des Laminats so weit wie möglich vermieden. Die Trocknung kann beispielsweise an einem Spannrahmen mit so wenig Zug wie möglich und maximaler Voreilung erfolgen.

Mithilfe des erfindungsgemäßen Verfahrens wird ein schwerentflammbares Vliesstoff-Membran-Laminat geschaffen, das sich durch eine besonders hohe Dehnbarkeit (Stretch) und Elastizität und ein besonders gutes Rücksprungverhalten auszeichnet.

Das erfindungsgemäße Vliesstoff-Membran-Laminat eignet sich insbesondere zur Verwendung bei schwerentflammbarer Schutzbekleidung, beispielsweise für Kopfschutzhauben, Bündchen und elastischen Einsätzen in Schutzbekleidungsstücken. Eine derartige Schutzbekleidung findet insbesondere Anwendung bei der Feuerwehr, Industrie, Behörden und im Motorsport.

Vorzugsweise weist die Schutzbekleidung eine lose Lage aus einem schwerentflammbaren Textilmaterial auf, mit der die Membran des schwerentflammbaren Vliesstoff-Membran-Laminats überdeckt ist. Diese lose Lage deckt die Membranseite des Laminats ab, dient damit dem Schutz der Membran und verbessert den Tragekomfort sowie das Feuchtigkeitsmanagement der Schutzbekleidung. Die lose Lage hat insbesondere die Funktion, Schweiß aufzunehmen und zu puffern, damit der Schweiß in Wasserdampfform durch die Membrane hindurch abgegeben werden kann. Weiterhin kann die lose Lage spezielle Eigenschaften wie erhöhte Temperaturbeständigkeit haben.

Die lose Lage wird vorzugsweise lediglich an den Hauptnähten der Schutzbekleidung mit dem Vliesstoff-Membran-Laminat verbunden.

Die lose Lage kann aus allen Fasern oder Fasermischungen bestehen, die im Zusammenhang mit dem schwerentflammbaren Vliesstoff genannt wurden. Vorzugsweise besteht die lose Lage daher aus einem oder mehreren der folgenden Materialien: M-Aramid, P-Aramid, Polyamidimid, Polyimid, Polybenzimidazol, Polybenzoxazol, Modacryl, Melaminharz, Viscose FR, Modal FR, Lyocell FR, Baumwolle FR, Baumwolle, Viskose, Modal, Lyocell, Aromatisches PES, Wolle, Polyamid, Polyester. Die lose Lage kann aus einem der vorgenannten Materialien oder aus einer Mischung mehrerer der vorgenannten Materialien bestehen. Insbesondere kann die lose Lage aus einer Mischung von Zellulosefasern und Modacryl-Fasern bestehen. Die Schwerentflammbarkeit kann eine inhärente Eigenschaft der jeweiligen Fasern sein oder durch eine entsprechende Ausrüstung der losen Lage erzielt werden.

## Patentansprüche

1. Verfahren zur Herstellung eines schwerentflammbaren Vliesstoff-Membran-Laminats, **gekennzeichnet durch** die folgenden Schritte:
- Bereitstellen eines schwerentflammbaren Vliesstoffs,
- Übernähen des Vliesstoffs mit einem elastischen Nähgarn mittels eines Nähwirkverfahrens oder mittels Versteppung, wobei das elastische Nähgarn in einem gedehnten Zustand mit dem Vliesstoff vernäht wird,
- Auflaminieren einer Membran auf den übernähten Vliesstoff zur Herstellung eines Vliesstoff-Membran-Laminats,
- Krumpfen des Vliesstoff-Membran-Laminats mittels eines Blindfärbe- oder Färbeprozesses in einer Färbemaschine oder einem Färbeapparat, wobei das Vliesstoff-Membran-Laminat in lockerer, nicht gespannter Form eine Flotte durchläuft oder in dieser verweilt,
- spannungsarmes Trocknen des gekrumpften Vliesstoff-Membran-Laminats, so dass das gekrumpfte und getrocknete Vliesstoff-Membran-Laminat zwischen einem zusammengezogenen Zustand und einem auseinandergezogenen Zustand elastisch verformbar ist und vom auseinandergezogenen Zustand mittels des elastischen Nähgarns in den zusammengezogenen Zustand rückführbar ist.

2. Verfahren nach Anspruch 1, **dadurch gekennzeichnet, dass** das Übernähen des Vliesstoffs mit dem elastischen Nähgarn mittels des Maliwatt-Verfahrens durchgeführt wird.

3. Verfahren nach Anspruch 1 oder 2, **dadurch gekennzeichnet, dass** das Auflaminieren der Membran auf den übernähten Vliesstoff mittels eines Klebstoffs durchgeführt wird, der in Form eines Gittermusters, hexagonalen Musters oder dreieckförmigen Musters auf den Vliesstoff oder die Membran aufgebracht wird.

4. Verfahren nach einem der vorhergehenden Ansprüche, **dadurch gekennzeichnet, dass** das Vliesstoff-Membran-Laminat vor dem Krumpfen einen Waschkrumpf von mindestens 15% aufweist.

5. Verfahren nach einem der vorhergehenden Ansprüche, **dadurch gekennzeichnet, dass** das Krumpfen des Vliesstoff-Membran-Laminats in einer Haspelkufe oder einer Jet-Färbemaschine durchgeführt wird.

6. Schwerentflammbares Vliesstoff-Membran-Laminat, das nach einem Verfahren gemäß den Ansprüchen 1 bis 5 hergestellt ist.

7. Vliesstoff-Membran-Laminat nach Anspruch 6, **dadurch gekennzeichnet, dass** der schwerentflammbare Vliesstoff aus einem oder mehreren der folgenden Materialien besteht: M-Aramid, P-Aramid, Polyamidimid, Polyimid, Polybenzimidazol, Polybenzoxazol, Modacryl, Melaminharz, Viscose FR, Modal FR, Lyocell FR, Baumwolle FR, Baumwolle, Viskose, Modal, Lyocell, Aromatisches PES, Wolle, Polyamid, Polyester.

8. Vliesstoff-Membran-Laminat nach Anspruch 6 oder 7, **dadurch gekennzeichnet, dass** der schwerentflammbare Vliesstoff ein Malivlies, Wasserstrahlvlies, Nadelfilz, Nadelvlies, ein Vliesstoff hergestellt durch chemische Faserverfestigung oder ein Vliesstoff hergestellt durch thermische Faserverfestigung mittels Einmischung und Aktivierung von Bikomponentenfasern ist.

9. Vliesstoff-Membran-Laminat nach einem der Ansprüche 6 bis 8, **dadurch gekennzeichnet, dass** das elastische Nähgarn aus Elasthan oder Silikon besteht.

10. Vliesstoff-Membran-Laminat nach einem der Ansprüche 6 bis 9, **dadurch gekennzeichnet, dass** die Membran eine atmungsaktive, wasserdampfdurchlässige Membran ist, die aus Polyurethan, Polyester, Polyether, ePTFE, Polyurethan-Nanofasern, Bikomponenten-Polyether oder Bikomponenten-ePTFE besteht.

11. Schwerentflammbare Schutzbekleidung mit einem schwerentflammbaren Vliesstoff-Membran-Laminat nach einem der Ansprüche 6 bis 10.

12. Schwerentflammbare Schutzbekleidung nach Anspruch 11, **dadurch gekennzeichnet, dass** die Membran des Vliesstoff-Membran-Laminats mittels einer losen Lage aus einem schwerentflammbaren Textilmaterial überdeckt ist.

13. Schwerentflammbare Schutzbekleidung nach Anspruch 12, **dadurch gekennzeichnet, dass** die lose Lage aus schwerentflammbarem Textilmaterial aus einem oder mehreren der folgenden Materialien besteht: M-Aramid, P-Aramid, Polyamidimid, Polyimid, Polybenzimidazol, Polybenzoxazol, Modacryl, Melaminharz, Viscose FR, Modal FR, Lyocell FR, Baumwolle FR, Baumwolle, Viskose, Modal, Lyocell, Aromatisches PES, Wolle, Polyamid, Polyester.

## Claims

1. Method for the production of a low-flammability non-woven-fabric membrane laminate, **characterised by** the following steps:
- providing a low-flammability non-woven fabric,
- sewing over the non-woven fabric with an elastic stitch by means of a stitch-bonding method or by means of stitching, wherein the elastic stitch is sewn together with the non-woven fabric in a stretched state,
- laminating a membrane onto the sewn-over non-woven fabric to produce a non-woven-fabric membrane laminate,
- pre-shrinking the non-woven-fabric membrane laminate by means of a blind dyeing or dyeing process in a dyeing machine or in a dyeing appliance, wherein, in a dry, untensioned state, the non-woven-fabric membrane laminate passes through, or remains within, a bath,
- low-tension drying of the pre-shrunk non-woven-fabric membrane laminate, such that the pre-shrunk and dried non-woven-fabric membrane laminate can be elastically deformed between a contracted state and a non-contracted state, and can be returned from the non-contracted state into the contracted state by means of the elastic stitch.

2. Method according to claim 1, **characterised in that** the sewing-over of the non-woven fabric with the elastic stitch is carried out by means of the Maliwatt method.

3. Method according to claim 1 or 2, **characterised in that** the lamination of the membrane onto the sewn-over non-woven-fabric is carried out by means of an adhesive that is applied to the non-woven fabric or the membrane by in the form of a grated pattern, hexagonal pattern or triangular pattern.

4. Method according to one of the preceding claims, **characterised in that** the non-woven-fabric membrane laminate has, prior to the pre-shrinking, a washing shrinkage level of at least 15%.

5. Method according to one of the preceding claims, **characterised in that** the pre-shrinking of the non-woven-fabric membrane laminate is carried out in a winch dyeing machine or a jet dyeing machine.

6. Low-flammability non-woven-fabric membrane laminate produced according to a method according to claims 1 to 5.

7. Non-woven-fabric membrane laminate according to claim 6, **characterised in that** the low-flammability non-woven-fabric consists of one or more of the following materials: M-aramid, P-aramid, polyamidoamide, polyimide, polybenzimidazole, polybenzoxazole, modacrylic, melamine resin, viscose-FR, modal-FR, lyocell-FR, cotton-FR, cotton, viscose, modal, lyocell, aromatic PES, wool, polyamide, polyester.

8. Non-woven-fabric membrane laminate according to claim 6 or 7, **characterised in that** the low-flammability non-woven fabric is a Malivlies, hydro-entangled non-woven fabric, needle felt, needled non-woven fabric, a non-woven fabric produced by chemical fibre bonding or a non-woven fabric produced by thermal fibre bonding, by means of mixing in and activating bicomponent fibres.

9. Non-woven-fabric membrane laminate according to one of claims 6 to 8, **characterised in that** the elastic stitch consists of elastane or silicone.

10. Non-woven-fabric membrane laminate according to one of claims 6 to 9, **characterised in that** the membrane is a breathable, water-vapour-permeable membrane that consists of polyurethane, polyester, polyether, ePTFE, polyurethane nanofibres, bicomponent polyether or bicomponent ePTFE.

11. Low-flammability protective clothing having a low-flammability non-woven-fabric membrane laminate according to one of claims 6 to 10.

12. Low-flammability protective clothing according to claim 11, **characterised in that** the membrane of the non-woven-fabric membrane laminate is covered by a loose layer made from a low-flammability textile material.

13. Low-flammability protective clothing according to claim 12, **characterised in that** the loose layer made from a low-flammability textile material consists of one or more of the following materials: M-aramid, P-aramid, polyamidoamide, polyimide, polybenzimidazole, polybenzoxazole, modacrylic, melamine resin, viscose-FR, modal-FR, lyocell-FR, cotton-FR, cotton, viscose, modal, lyocell, aromatic PES, wool, polyamide, polyester.

## Revendications

1. Procédé de fabrication d'un stratifié membrane-non-tissé ignifuge, **caractérisé par** les étapes suivantes consistant à :
- fournir un non-tissé ignifuge,
- surpiquer le non-tissé avec un fil à coudre élastique par un procédé de tricotage ou par matelassage, le fil à coudre élastique étant cousu à l'état étiré avec le non-tissé,
- appliquer une membrane sur le non-tissé surpiqué pour produire un stratifié membrane-non-tissé,
- prérétrécir le stratifié membrane-non-tissé par un processus de teinture à l'aveugle ou un processus de teinture en machine ou en appareil de teinture, le stratifié membrane-non-tissé passant ou restant immergé dans un bain sous forme lâche et non étirée,
- sécher sous une forme faiblement tendue le stratifié membrane-non-tissé prérétréci, permettant ainsi au stratifié membrane-non-tissé prérétréci et séché d'être déformable élastiquement entre un état contracté et un état étiré, et de revenir de l'état étiré à l'état contracté grâce au fil de couture élastique.

2. Procédé selon la revendication 1, **caractérisé en ce que** la surpiqûre du non-tissé avec le fil à coudre élastique est réalisée selon la méthode Maliwatt.

3. Procédé selon la revendication 1 ou 2, **caractérisé en ce que** l'application de la membrane sur le non-tissé surpiqué est réalisée au moyen d'un adhésif qui est appliqué sur le non-tissé ou sur la membrane sous la forme d'un motif grillagé, d'un motif hexagonal ou d'un motif triangulaire.

4. Procédé selon l'une des revendications précédentes, **caractérisé en ce que** le stratifié membrane-non-tissé présente un retrait au lavage d'au moins 15 % avant le prérétrécissement.

5. Procédé selon l'une des revendications précédentes, **caractérisé en ce que** le prérétrécissement du stratifié membrane-non-tissé s'effectue dans une machine à teindre à tambour ou une machine à teinture par jet.

6. Stratifié membrane-non-tissé ignifuge produit selon un procédé conforme aux revendications 1 à 5.

7. Stratifié membrane-non-tissé selon la revendication 6, **caractérisé en ce que** le non-tissé ignifuge est constitué d'une ou plusieurs des matières suivantes : M-aramide, P-aramide, polyamide-imide, polyimide, polybenzimidazole, polybenzoxazole, modacrylique, résine de mélamine, viscose FR, modal FR, lyocell FR, coton FR, coton, viscose, modal, lyocell, PES aromatique, laine, polyamide, polyester.

8. Stratifié membrane-non-tissé selon la revendication 6 ou 7, **caractérisé en ce que** le non-tissé ignifuge est un non-tissé Mali, un non-tissé spunlace, un feutre aiguilleté, un non-tissé aiguilleté, un non-tissé produit par liaison chimique des fibres ou un non-tissé produit par liaison thermique des fibres au moyen d'une incorporation et d'une activation de fibres bicomposants.

9. Stratifié membrane-non-tissé selon l'une des revendications 6 à 8, **caractérisé en ce que** le fil de couture élastique se compose d'élasthane ou de silicone.

10. Stratifié membrane-non-tissé selon l'une des revendications 6 à 9, **caractérisé en ce que** la membrane est une membrane respirante et perméable à la vapeur d'eau, composée de polyuréthane, de polyester, de polyéther, d'ePTFE, de nanofibres de polyuréthane, de polyéther bicomposant ou d'ePTFE bicomposant.

11. Vêtement de protection ignifuge comprenant un stratifié membrane-non-tissé ignifuge selon l'une des revendications 6 à 10.

12. Vêtement de protection ignifuge selon la revendication 11, **caractérisé en ce que** la membrane du stratifié membrane-non-tissé est recouverte d'une couche lâche de matière textile ignifuge.

13. Vêtement de protection ignifuge selon la revendication 12, **caractérisé en ce que** la couche lâche de matière textile ignifuge se compose d'une ou plusieurs des matières suivantes : M Aramide, P-Aramide, polyamide-imide, polyimide, polybenzimidazole, polybenzoxazole, modacrylique, résine de mélamine, viscose FR, modal FR, lyocell FR, coton FR, coton, viscose, modal, lyocell, PES aromatique, laine, polyamide, polyester.
